(19) Europäisches Patentamt
European Patent Office
Office européen des brevets

(11) **EP 4 153 676 B1**

(12) **EUROPEAN PATENT SPECIFICATION**

(45) Date of publication and mention
of the grant of the patent:
**17.09.2025 Bulletin 2025/38**

(21) Application number: **21726128.8**

(22) Date of filing: **19.05.2021**

(51) International Patent Classification (IPC):
**C08L 23/08** (2025.01)     **C08F 210/02** (2006.01)
**H01B 3/44** (2006.01)     **C08F 210/16** (2006.01)
**C08L 23/0807** (2025.01)

(52) Cooperative Patent Classification (CPC):
(C-Sets available)
**C08L 23/0815; H01B 3/441;** C08F 210/16;
C08L 2203/202; C08L 2205/025; C08L 2314/06
(Cont.)

(86) International application number:
**PCT/EP2021/063370**

(87) International publication number:
**WO 2021/234042 (25.11.2021 Gazette 2021/47)**

(54) **POLYMER FOR POWER CABLE INSULATION**

POLYMER ZUR STROMKABELISOLIERUNG

POLYMÈRE POUR L'ISOLATION DE CÂBLES ÉLECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2020 EP 20175704**

(43) Date of publication of application:
**29.03.2023 Bulletin 2023/13**

(73) Proprietor: **Borealis GmbH**
**1020 Vienna (AT)**

(72) Inventors:
• **HJÄRTFORS, Anna**
**444 86 Stenungsund (SE)**

• **HAGSTRAND, Per-Ola**
**444 86 Stenungsund (SE)**
• **ENGLUND, Villgot**
**444 86 Stenungsund (SE)**
• **KELA, Jarmo**
**06850 Kulloo (FI)**

(74) Representative: **Dehns**
**10 Old Bailey**
**London EC4M 7NG (GB)**

(56) References cited:
**EP-A1- 2 182 524     EP-A1- 3 252 085**

(52) Cooperative Patent Classification (CPC): (Cont.)

C-Sets
**C08F 210/16, C08F 2/001;**
**C08F 210/16, C08F 4/6492;**
**C08L 23/0815, C08L 23/0815, C08L 23/0815;**
C08F 210/16, C08F 210/08, C08F 2500/12;
C08F 210/16, C08F 210/14, C08F 210/08,
C08F 2500/04, C08F 2500/12, C08F 2500/34,
C08F 2500/30, C08F 2500/27, C08F 2500/02,

C08F 2500/36, C08F 2500/17;
C08F 210/16, C08F 210/14, C08F 210/08,
C08F 2500/04, C08F 2500/12, C08F 2500/34,
C08F 2500/30, C08F 2500/27, C08F 2500/36,
C08F 2500/17;
C08F 210/16, C08F 210/14, C08F 2500/04,
C08F 2500/12, C08F 2500/34, C08F 2500/30,
C08F 2500/27, C08F 2500/02, C08F 2500/04,
C08F 2500/17

**Description**

**Field of invention**

This invention relates to a multimodal polyethylene composition suitable for use in the insulation layer of a power cable, for example, a high voltage direct current (HV DC) power cable. The invention also relates to a power cable comprising the multimodal polyethylene composition as defined herein in a layer, such as an insulation layer. In further embodiments, the invention relates to processes for the preparation of the multimodal polyethylene composition and processes for preparing cables comprising said multimodal polyethylene composition.

**Background art**

Polyolefins produced in a high pressure (HP) process are widely used in demanding polymer applications. The polymers must meet high mechanical and/or electrical requirements. For instance in power cable applications, particularly in medium voltage (MV) and especially in high voltage (HV) and extra high voltage (EHV) cable applications, the electrical properties of the polymer composition have a significant importance. Furthermore, the electrical properties of importance may differ in different cable applications, as is the case between alternating current (AC) and direct current (DC) cable applications.

A typical power cable comprises a conductor surrounded, at least, by an inner semiconductive layer, an insulation layer and an outer semiconductive layer, in that order. The cables are commonly produced by extruding the layers on a conductor. LDPE is often used as the polymer in the insulation layer of such cables. The LDPE polymer is often crosslinked to improve, e.g., heat and deformation resistance, creep properties, mechanical strength, chemical resistance and abrasion resistance of the polymer in the layer(s) of the cable. The crosslinking reaction produces crosslinks (bridges). Crosslinking can be achieved using a free radical generating compound, such as a peroxide. The free radical generating agent is typically incorporated to the layer material prior to, or during, the extrusion of the layer(s) on a conductor. After formation of the layered cable, the cable is then subjected to a crosslinking step to initiate the radical formation and thereby crosslinking reaction.

Peroxides are very common free radical generating compounds used in the polymer industry for said polymer modifications. The resulting decomposition products of peroxides are undesired as they may be volatile and may have a negative influence on the properties of the cable. Therefore the volatile decomposition products such as methane where, for example, dicumylperoxide is used, are conventionally reduced to a minimum or removed after crosslinking and cooling step. Such removal step is generally known as a degassing step. The degassing step is time and energy consuming and is thus a costly operation in a cable manufacturing process.

The present inventors sought an alternative therefore to crosslinked LDPE in the insulation layer of a cable.

It will be appreciated that any polymer suitable for use in the insulation layer of a power cable should possess certain properties. It should have exceptionally low conductivity, such as a low DC electrical conductivity. High DC conductivity of the insulating material can lead to thermal runaway under high stress/high temperature conditions and subsequently breakdown of the insulation system. The DC conductivity must therefore be sufficiently low to avoid thermal runaway. It would be advantageous if the polymer had improved heat conductivity compared to LDPE. It would also be useful if the polymer was flexible, e.g. had a low elastic modulus. Lower elastic modulus offers benefits, especially with reference to Ziegler Natta produced polymers which tend to have much higher elastic modulus. A lower elastic modulus implies a more flexible polymer which is important in cable applications.

It would be useful therefore to prepare a polymer for the insulation layer of a cable that satisfies the demand to increase the voltage of a power cable, and particularly of a direct current (DC) power cable. It would be useful to prepare a polymer for the insulation layer of a cable that satisfies the demand to reduce DC conductivity. It would be useful to prepare a polymer for the insulation layer of a cable that has low elastic modulus and improved heat conductivity.

The present inventors have found that certain multimodal medium/high density polyethylene compositions offer an ideal solution to this problem.

Low pressure polyethylenes (i.e. non LDPEs) have been suggested in the literature for use in power cables. WO2012/150286 describes the combination a conventional unimodal HDPE and hydrotalcite as a means of minimising conductivity in a cable insulation.

WO2017/220609 describes blends of LDPE with other polymers in a cable insulation. The 2nd component is an UHMW PE or metallocene MDPE or LLDPE.

WO2016/097250 describes the use of single site based polyethylene in cable insulation. It exemplifies certain bimodal metallocene catalysed MDPE terpolymers with densities lower than required in the present invention.

In EP3252085, inventive examples 1 and 2 are bimodal ethylene copolymers comprising an ethylene butene copolymer produced in loop reactor (A2) and an ethylene hexene copolymer produced in gas phase reactor (A3). There is also a prepolymerisation step. There is no disclosure that the LMW component (A) comprises two fractions (ai) and (aii).

EP 2182524 describes power cables surrounded by at least one layer comprising a multimodal ethylene copolymer. The multimodal ethylene copolymer does not comprise a LMW component with two fractions.

**Summary of the invention**

Viewed from one aspect the invention provides a multimodal polyethylene composition having a lower molecular weight (LMW) ethylene homo or copolymer component (A) and a higher molecular weight ethylene copolymer component (B);

wherein the lower molecular weight component comprises:

(ai) a first fraction which comprises an ethylene homo or copolymer of ethylene and one or more C3-10 alpha olefins; and
(aii) a second fraction which comprises a different ethylene homo or copolymer of ethylene and one or more C3-10 alpha olefins;

wherein the $MFR_2$ of the fraction (ai) is lower than fraction (aii) and wherein each fraction (ai) and (aii) of the LMW component forms at least 10 wt% of the multimodal polyethylene composition;
wherein the multimodal polymer composition has a density of 930 $kg/m^3$ or more (ISO1183), an $MFR_2$ (ISO1133 at 190°C and 2.16 kg load) in the range of 0.05 to 10 g/10min, and a flexural modulus of up to 800 MPa, such as 300 to 800 MPa (ISO 178:2010).

Viewed from another aspect the invention provides a cable comprising a conductor surrounded by at least one layer comprising a multimodal polyethylene composition as hereinbefore defined.

Viewed from another aspect the invention provides a cable comprising a conductor surrounded by an inner semiconductive layer, an insulating layer and an outer semiconductive layer, wherein at least the insulation layer comprises a multimodal polyethylene composition as defined herein.

Viewed from another aspect the invention provides a process for the preparation of a multimodal polyethylene composition comprising lower molecular weight (LMW) ethylene homo or copolymer component (A) and a higher molecular weight ethylene copolymer component (B), said process comprising:

(I) polymerizing ethylene and optionally at least one C3-10 alpha olefin comonomer in the presence of a single site catalyst in a first slurry reactor to produce a fraction (ai);
(II) polymerizing ethylene and optionally at least one C3-10 alpha olefin comonomer in the presence of the single site catalyst and fraction (ai) in a second slurry reactor so as to prepare a fraction (aii) which together with fraction (ai) forms said lower molecular weight ethylene homo or copolymer component (A) wherein each fraction (ai) and (aii) of the LMW component forms at least 10 wt% of the multimodal polyethylene composition and;
(III) in the presence said LMW ethylene homo or copolymer component (A) and said single site catalyst, polymerizing ethylene and at least one C3-10 alpha olefin comonomer so as to form said higher molecular weight ethylene copolymer component (B);

wherein said multimodal polyethylene composition has a density of 930 $kg/m^3$ or more, an $MFR_2$ (ISO1133 at 190°C and 2.16 kg load) in the range of 0.05 to 10 g/10min, and a flexural modulus of up to 800 MPa (ISO 178:2010).

It is particularly preferred if fractions (ai) and (aii) are prepared in first and second slurry reactors and that component (B) is prepared in a gas phase reactor, all three reactors being connected in series.

In one embodiment, the invention provides a process for polymerizing ethylene in at least two slurry reactors and at least one a gas phase reactor connected in series to prepare a multimodal polyethylene composition, wherein said multimodal polyethylene composition comprises

a lower molecular weight (LMW) ethylene homo or copolymer component (A) and a higher molecular weight ethylene copolymer component (B), wherein a single site catalyst is used in the polymerisation of at least one of the LMW or HMW components,
the composition having a density of 930 $kg/m^3$ or more, an $MFR_2$ (ISO1133 at 190°C and 2.16 kg load) in the range of 0.05 to 10 g/10min, and a flexural modulus of up to 800 MPa (ISO 178:2010);
wherein fraction (A) comprises two fractions (ai) and (aii) whereby fraction (ai) is produced in a first slurry loop reactor and fraction (aii) produced in a second slurry loop reactor and wherein each fraction (ai) and (aii) of the LMW component forms at least 10 wt% of the multimodal polyethylene composition.

**Detailed Description of Invention**

The present invention relates to a multimodal polyethylene composition which is ideally suited for use in the insulation layer of a cable. Unexpectedly, the multimodal polyethylene composition of the present invention has advantageous mechanical and electrical properties, e.g. the DC electrical conductivity of the polymer is low. This is achieved without any crosslinking by means of a crosslinking agent, such as peroxide.

Moreover, the non-crosslinked multimodal polyethylene composition of the invention is flexible (it has a low elastic modulus) which is desirable and a key feature of the invention. A flexible polymer is ideally suited to cable manufacture. The melting point of the multimodal polyethylene composition is preferably, at least 122 °C, such as in the range of 122 to 135°C, more preferably 123 to 132 °C, especially 124 to 130 °C. The combination of a reduced flexural modulus and the high melting point is a key aspect of the invention.

**Multimodal Polyethylene Composition**

The multimodal polyethylene composition of the invention is a medium or high density multimodal polyethylene composition having a density of 930 kg/m$^3$ or more, preferably 938 kg/m$^3$ or more, such as 938 to 955 kg/m$^3$ (measured using ISO 1183).

A preferred range is 934 to 955 kg/m$^3$, such as 938 to 950 kg/m$^3$, more preferably 938 kg/m$^3$ to 946 kg/m$^3$, especially 940 to 945 kg/m$^3$.

The term multimodal means multimodal with respect to molecular weight distribution (MWD= Mw/Mn). Generally, a polymer comprising at least two polymer fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The term "multimodal" therefore means herein, unless otherwise stated, multimodality at least with respect to molecular weight distribution (MWD= Mw/Mn) and includes also bimodal polymer.

It is preferred if the multimodal polyethylene composition of the invention is trimodal.

It is preferred if the multimodal polyethylene composition of the invention consists of the lower and higher molecular weight components.

It is preferred if the lower molecular weight component consists of the fractions (ai) and (aii) (and optionally the prepolymer component) and hence the multimodal polyethylene composition of the invention preferably consists of fractions (ai) and (aii) and the higher molecular weight components (and optionally the prepolymer component).

The multimodal polyethylene composition may have an Mw/Mn (MWD) of at least 4, for example, 5 to 15, preferably 5 to 12.

The multimodal polyethylene composition may have an MFR$_2$ of 0.05 to 5.0 g/10 min, preferably 0.1 to 4.0 g/10 min, more preferably 0.25 to 3.5 g/10min (ISO1133, at 190°C and 2.16 kg load).

The multimodal polyethylene composition may have an MFR$_{21}$ of 10 to 100 g/10 min, preferably 15 to 90 g/10 min (ISO1133, at 190°C and 21.6 kg load).

The multimodal polyethylene composition comprises at least one C3-10 alpha olefin comonomer(s), preferably at least one C3-8 alpha olefin comonomer(s). In some embodiments, the multimodal polyethylene composition comprises at least two C3-10 alpha olefin comonomers, preferably at least two C3-8 alpha olefin comonomers. The term comonomer as used herein means monomer units other than ethylene, which are copolymerisable with ethylene.

The olefin comonomer(s) is preferably a C$_{4-10}$ alpha-olefins, e.g. 1-butene, 1-hexene or 1-octene. A particularly preferred multimodal polyethylene composition comprises 1-butene and 1-hexene as comonomers.

The amount of comonomer(s) present in the multimodal polyethylene composition of the invention may be 0.25 to 2.0 mol%, such as 0.5 to 1.5 mol%, preferably 0.5 to 1.0 mol%. This can be determined using NMR.

The multimodal polyethylene composition of the invention may have a flexural modulus of up to 800 MPa, such as 200 to 800 MPa, more preferably 300 to 800 MPa, such as 500 to 775 MPa.

The multimodal polyethylene composition of the invention may also have an eta300 value of less than 1000 Pa.s, such as 100 to 800 Pa.s.

The multimodal polyethylene composition of the invention may also have an eta0.05 value of more than 3000 Pa.s, such as 3500 to 7000 Pa.s.

The multimodal polyethylene composition of the invention may also have a melting point of at least 123°C, such as 125 to 135°C. In one embodiment, the ratio between flexural modulus and melting point is between 4.5 and 6.5 (flexural mod.in MPa/melting point in celsius), preferably between 5.0 and 6.0. This is a key feature that defines a low flexural modulus with retained high melting point.

The multimodal polyethylene composition of the invention may have a Shore D hardness after 3 seconds of 55 to 65.

The multimodal polyethylene composition of the invention may have a tensile strain at break of 600 to 800%.

The multimodal polyethylene composition of the invention may have a tensile stress at break 25 to 45 MPa, especially 30 to 40 MPa.

The multimodal polyethylene composition of the invention may also have a DC electrical conductivity of 20 fS/m or less, for example, 10 fS/m or less, e.g., 5.0 fS/m or less, for example, 0.05 to 20 fS/m, e.g. 0.05 to 10 fS/m, for example, 0.05 to 5.0 fS/m when measured according to the DC conductivity method as described under "Determination Methods" at 30 kV/mm. In one embodiment, the DC conductivity of the multimodal polyethylene composition of the invention is less than 7.0 fS/m measured at 70 °C and 30 kV/mm mean electric field on a 0.5 mm plaque sample consisting of the polymer.

In embodiments of the present invention, the multimodal composition has, for example, a DC electrical conductivity of 25 fS/m or less, for example, 20 fS/m or less, e.g., 15 fS/m or less, for example, 0.05 to 20 fS/m, e.g. 0.05 to 10 fS/m, preferably, 0.05 to 5.0 fS/m when measured according to the DC conductivity method as described under "Determination Methods" at 30 kV/mm

**Components of the multimodal polyethylene composition**

The multimodal polyethylene composition of the invention comprises a LMW component which is an ethylene homo or copolymer and a HMW component which is an ethylene copolymer. The expression 'ethylene homopolymer' according to the present invention relates to an ethylene polymer that consists substantially of ethylene and thus is an ethylene polymer which only includes ethylene monomer units.

The comonomer(s) present in the LMW and HMW components may be the same or different, preferably different. The comonomer present in the fractions (ai) and (aii) of the LMW component may be the same or different, preferably the same. For example 1-butene may be used for the fractions of the LMW component and 1-hexene may be employed in the HMW component. Where there are at least two different comonomers present, the multimodal polyethylene composition of the invention is regarded as a terpolymer herein.

Any component or fraction of the multimodal polyethylene composition may also be a terpolymer which means that at least one component (A) or (B) or fraction (ai) or (aii) comprises ethylene and at least two different C3-10 alpha olefin comonomers.

The LMW component may be a homopolymer or an ethylene copolymer with at least one C4-10 alpha olefin, especially an ethylene 1-butene copolymer.

Preferably the HMW component is an ethylene copolymer with at least one C4-10 alpha olefin, especially an ethylene 1-hexene copolymer or ethylene 1-octene copolymer.

In a further embodiment, the HMW component is an ethylene terpolymer with at least two C4-10 alpha olefins, especially an ethylene, 1-butene and 1-hexene terpolymer.

The multimodal polyethylene composition as defined herein comprises a lower weight average molecular weight (LMW) component (A) and a higher weight average molecular weight (HMW) component (B). Said LMW component has a lower molecular weight than the HMW component, e.g. by at least 5000 mass units. Alternatively viewed, said LMW component has a higher $MFR_2$ than the HMW component, e.g. by at least 1.0 g/10min.

It is preferred if the multimodal polyethylene composition comprises:

(A) a lower molecular weight ethylene copolymer component of ethylene and one or more C3-10 alpha olefins; and
(B) a higher molecular weight ethylene copolymer component of ethylene and one or more C3-10 alpha olefins.

More preferably, the multimodal polyethylene composition comprises

(A) a lower molecular weight ethylene copolymer component with one or more C3-8 alpha olefins; and
(B) a higher molecular weight ethylene copolymer component with one or more C3-8 alpha olefins.

The split between components (A) and (B) can be controlled. A multimodal polyethylene composition of the invention may have 35 to 60 wt%, preferably 35 to 55 wt% of said lower molecular weight component (A) and 40 to 65 wt%, preferably 45 to 65 wt% of said higher molecular weight component (B), preferably 38 to 52 wt% of said lower molecular weight component (A) and 48 to 62 wt% of said higher molecular weight component (B).

The LMW component (A) may have an $MFR_2$ of 20 to 500 g/10min, such as 20 to 200 g/10min. As the HMW component tends to be produced in the presence of the LMW component in a multistage process, its properties often cannot be directly measured but they can be estimated using the Hagström equation.

The LMW component (A) may have a density of 940 to 970 kg/m$^3$.

The LMW component (A) of the multimodal polyethylene composition is itself made up of two fractions (ai) and (aii). Hence the lower molecular weight component comprises:

(ai) a first fraction which comprises an ethylene homo or copolymer of ethylene and one or more C3-10 alpha olefins; and

(aii) a second fraction which comprises a different ethylene homo or copolymer of ethylene and one or more C3-10 alpha olefins.

Preferably, the lower molecular weight component comprises

(ai) 40 to 60 wt% of a first fraction; and
(aii) 40 to 60 wt% of a second fraction.

Preferably, the lower molecular weight component comprises

(ai) 40 to 60 wt% of a first ethylene homopolymer fraction or copolymer fraction of ethylene and one or more C3-8 alpha olefins; and

(aii) 40 to 60 wt% of a second different ethylene homopolymer fraction or copolymer fraction of ethylene and one or more C3-8 alpha olefins.

In a preferred embodiment there can be 45 to 55 wt% of (ai) and 55 to 45 wt% of (aii).

It is preferred if the comonomer used in both fractions of the LMW component is the same and it is more preferred if this is 1-butene. Alternatively, the LWM component (A) can be a homopolymer, i.e. both fractions (ai) and (aii) are homopolymers. These fractions still need to differ in terms of MFR.

The $MFR_2$ of the fraction (ai) is lower than fraction (aii), e.g. by at least 1.0 g/10min.

Fraction (ai) preferably has an $MFR_2$ of 10 to 40 g/10min.

Fraction (ai) preferably has a density of 945 to 980 kg/m$^3$.

The properties of the lower molecular weight component discussed herein can be regarded as those of the combination of fractions (ai) and (aii) (and optionally the prepolymer component).

More preferably, the multimodal polyethylene composition comprises a lower molecular weight ethylene 1-butene copolymer component; and a higher molecular weight ethylene 1-hexene copolymer component, especially wherein the lower molecular weight component comprises:

(ai) a first ethylene 1-butene copolymer fraction; and
(aii) a second different ethylene 1-butene copolymer fraction.

Without wishing to be limited by theory, it is envisaged that the use of this split lower molecular weight component structure leads to certain reductions in flexural modulus.

Each fraction (ai) and (aii) of the LMW component forms at least 10 wt% of the multimodal polyethylene composition, such as at least 12 wt% of the multimodal polyethylene composition.

Each fraction (ai) and (aii) of the LMW component ideally forms 10 to 30 wt% of the multimodal polyethylene composition, such as at least 12 to 30 wt% of the multimodal polyethylene composition.

The weight ratio between fractions (ai) and (aii) of the LMW component is preferably in the range of 1:5 to 5:1, such as 4:1 to 1:4. Each fraction (ai) and (aii) preferably forms at least 20 wt% of the LMW component, such as at least 30 wt% of the LMW component.

If the multimodal polyethylene composition comprises a prepolymerisation component then such a component is deemed to form a part of (but not all of) fraction (ai). Fraction (ai) is not therefore represented by a prepolymer alone.

In a highly preferred embodiment, the invention defines a multimodal polyethylene composition comprising

(A) 35 to 60 wt% of a lower molecular weight ethylene homopolymer or copolymer component comprising:

(ai) 40 to 60 wt% of a first ethylene homopolymer fraction or copolymer fraction of ethylene and one or more C3-10 alpha olefins; and

(aii) 40 to 60 wt% of a second different ethylene homopolymer fraction or copolymer fraction of ethylene and one or more C3-10 alpha olefins;

(B) 40 to 65 wt% of a higher molecular weight ethylene copolymer component of ethylene and one or more C3-10 alpha olefins.

In a highly preferred embodiment, the invention defines a multimodal polyethylene composition comprising at least two C3-10 alpha olefin comonomers, said composition comprising

(A) a lower molecular weight ethylene homopolymer or copolymer component comprising:

(ai) 40 to 60 wt% of a first ethylene homopolymer fraction or copolymer fraction of ethylene and one or more C3-10 alpha olefins; and
(aii) 40 to 60 wt% of a second different ethylene homopolymer fraction or copolymer fraction of ethylene and one or more C3-10 alpha olefins; and

(B) 40 to 65 wt% of a higher molecular weight ethylene copolymer component of ethylene and one or more C3-10 alpha olefins.

Alternatively viewed, the invention defines a multimodal polyethylene composition comprising

(ai) 14 to 36 wt% of a first ethylene homopolymer fraction or copolymer fraction of ethylene and one or more C3-10 alpha olefins; and
(aii) 14 to 36 wt% of a second different ethylene homopolymer fraction or copolymer fraction of ethylene and one or more C3-10 alpha olefins; and

(B) 40 to 65 wt% of a higher molecular weight ethylene copolymer component of ethylene and one or more C3-10 alpha olefins.

It is preferred if the multimodal polyethylene composition comprises

(ai) 16 to 28 wt% of a first ethylene homopolymer fraction or copolymer fraction of ethylene and one or more C3-10 alpha olefins; and
(aii) 16 to 28 wt% of a second different ethylene homopolymer fraction or copolymer fraction of ethylene and one or more C3-10 alpha olefins.

In all embodiments of the invention, the multimodal polyethylene composition is preferably non-crosslinked. Alternatively viewed, the multimodal polyethylene composition is thermoplastic.

It is a further feature of the invention that the thermal conductivity of the polymer is improved. High thermal conductivity leads to higher power transmission capacity or lower losses.

All the properties above can be determined in the presence or absence of standard additives.

In a most preferred embodiment therefore the invention provides a multimodal polyethylene composition having a density of 930 kg/m$^3$ or more, preferably 938 kg/m$^3$ or more, an $MFR_2$ in the range of 0.05 to 10 g/10min, a flexural modulus of up to 800 MPa (ISO 178:2010), comprising:

(a) 35 to 55 wt% of a lower molecular weight ethylene homopolymer or copolymer component comprising:

(ai) 40 to 60 wt% of a first ethylene homopolymer fraction or copolymer fraction of ethylene and one or more C3-8 alpha olefins; and
(aii) 40 to 60 wt% of a second different ethylene homopolymer fraction or copolymer fraction of ethylene and one or more C3-8 alpha olefins;

(b) 65 to 45 wt% of a higher molecular weight ethylene copolymer component of ethylene and one or more C3-8 alpha olefins.

## Catalyst for the preparation of the multimodal composition

The multimodal polyethylene composition of the invention is one that is preferably prepared using a single site catalyst, preferably a metallocene catalyst, especially one with two cyclopentadienyl type ligands. The same catalyst is preferably used to prepare all components.

The expression "a single site polyethylene (SSPE)" means that the polyethylene is polymerised in the presence of a single site catalyst which is a conventional coordination catalyst. The single site catalyst may suitably be a metallocene catalyst. Such catalysts comprise a transition metal compound which contains a cyclopentadienyl, indenyl or fluorenyl ligand. The catalyst preferably contains two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups and like. Suitable metallocene compounds are known in the art and are disclosed, among others, in WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Especially, the metallocene compound must be capable of producing polyethylene having sufficiently high molecular weight, which is needed in order to guarantee good mechanical properties of, for example, a power cable insulation.

One example of suitable metallocene compounds is the group of metallocene compounds having zirconium, titanium or hafnium as the transition metal and one or more ligands having indenyl structure bearing a siloxy substituent, such as [ethylenebis(3,7-di(tri-isopropylsiloxy)inden-1-yl)]zirconium dichloride (both rac and meso), [ethylenebis(4,7-di(tri-isopropylsiloxy)inden-1-yl)]zirconium dichloride (both rac and meso), [ethylenebis(5-tert-butyldimethylsiloxy)inden-1-yl)]zirconium dichloride (both rac and meso), bis(5-tert-butyldimethylsiloxy)inden-1-yl)zirconium dichloride, [dimethylsilylenenebis(5-tert-butyldimethylsiloxy)inden-1-yl)]zirconium dichloride (both rac and meso), (N-tert-butylamido) (dimethyl)($\eta^5$-inden-4 -yloxy)silanetitanium dichloride and [ethylenebis(2- (tert-butydimethylsiloxy)inden-1-yl)]zirconium dichloride (both rac and meso).

Another example is the group of metallocene compounds having zirconium or hafnium as the transition metal atom and bearing a cyclopentadienyl type ligand, such as bis(n-butylcyclopentadienyl)hafnium/Zr dichloride, bis(n-butylcyclopentadienyl) dibenzyl hafnium/Zr, dimethylsilylenenebis(n-butylcyclopentadienyl)hafnium/Zr dichloride (both rac and meso) and bis[1,2,4-tri(ethyl)cyclopentadienyl]hafnium/Zr dichloride.

Still another example is the group of metallocene compounds bearing a tetrahydroindenyl ligand such as bis(4,5,6,7-tetrahydroindenyl)zirconium dichloride, bis(4,5,6,7-tetrahydroindenyl)hafnium dichloride, ethylene-bis(4,5,6,7-tetrahydroindenyl)zirconium dichloride, dimethylsilylenebis(4,5,6,7-tetrahydroindenyl)zirconium dichloride. The use of bis(1-methyl-3-n-butylcyclopentadienyl) zirconium (IV) chloride is especially preferred.

A suitable single site catalyst may thereby especially be alumoxane containing, supported catalyst containing metallocene bis(1-methyl-3-n-butylcyclopentadienyl) zirconium (IV) chloride and with enhanced ActivCat® activator technology from Albemarle (Grace) Corporation.

The single site catalyst typically also comprises an activator. Generally used activators are aluminoxane compounds, such as methylalumoxane (MAO), tetraisobutylalumoxane (TIBAO) or hexaisobutylalumoxane (HIBAO). Also boron activators, such as those disclosed in US-A-2007/049711 may be used. The activators mentioned above may be used alone or they may be combined with, for instance, aluminium alkyls, such as triethylaluminium or tri-isobutylaluminium.

Depending on the polymerisation process, the single site catalyst may be supported. The support may be any particulate support, including inorganic oxide support, for example, silica, alumina or titanium, or a polymeric support, for example, a polymeric support comprising styrene or divinylbenzene.

The catalyst may also be prepared according to emulsion solidification technology. Such catalysts are disclosed, among others, in EP-A-1539775 or WO-A-03/051934.

**Process**

The multimodal polyethylene composition can be produced by blending mechanically together two or more separate polymer components or, preferably, by *in-situ* blending during a polymerisation process. Both mechanical and *in-situ* blending are well known in the field. The multimodal polyethylene composition of the invention is preferably prepared in two or more reactors or zones connected in series as described in EP-A-0517868.

The polymerisation may be effected in bulk, slurry, solution, or gas phase conditions or in any combinations thereof. In one embodiment, the multistage process involves a first polymerisation step (LMW component) carried out in at least one slurry, e.g. loop, reactor, preferably two slurry reactors, and a second polymerisation step (HMW component) in a gas phase reactor.

In addition to actual polymerization steps, the process can contain a prepolymerization step. Optionally and advantageously, the main polymerisation stages may be preceded by a pre-polymerisation, in which case a prepolymer is produced, most preferably in an amount of for example 0.1 to 5% or 1 to 3 % by weight of the total amount of polymers is produced. The pre-polymer may be an ethylene homo- or copolymer.

If a pre-polymerisation takes place, in this case all of the catalyst is preferably charged into the first prepolymerisation reactor and the prepolymerisation is performed as slurry polymerisation. Thus, the prepolymerization step may be conducted in a loop reactor. Such a polymerisation leads to less fine particles being produced in the following reactors and to a more homogeneous product being obtained in the end.

The prepolymerization is preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

In the present invention it is preferred that the pre-polymerisation operates at a temperature between 40 to 70 °C, more preferred between 50 to 65 °C and preferably at a pressure of 50 to 70 bar, more preferably of 55 to 65 bar.

The molecular weight of the prepolymer may be controlled by hydrogen as it is known in the art. Note that where a prepolymerisation step is used, any weight percentage of product produced in such a step should be considered part of component (A) and should be taken into account when identifying the weight percentage of component (A). In particular, the prepolymer can be regarded as part of fraction (ai) of the LMW component however the prepolymer alone is not regarded as one of the fractions defined in claim 1.

After prepolymerisation, the main polymerisation takes place preferably in two slurry reactors then a gas phase reactor.

The LMW component is ideally produced in a first polymerization stage which is preferably a slurry polymerization. The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to about 50 % by mole, preferably from about 2 to about 20 % by mole and in particular from about 2 to about 10 % by mole.

The temperature in the first slurry reactor is typically from 60 to 100°C, preferably from 70 to 90°C. An excessively high temperature should be avoided to prevent partial dissolution of the polymer into the diluent and the fouling of the reactor. The pressure may range from 40 to 70 bar, preferably from 50 to 60 bar.

The temperature in the second slurry reactor is typically from 60 to 100°C, preferably from 70 to 90°C. The pressure may range from 40 to 70 bar, preferably from 50 to 60 bar.

The slurry polymerization may be conducted in any known reactor used for slurry polymerization. Such reactors include a continuous stirred tank reactor and a loop reactor. It is especially preferred to conduct the polymerization in a loop reactor.

Hydrogen can be introduced to control the $MFR_2$ of the LMW component. The amount of hydrogen needed to reach the desired MFR depends on the catalyst used and the polymerization conditions.

The comonomer can be introduced into the first polymerization stage. The amount of comonomer needed to reach the desired density depends on the comonomer type, the catalyst used and the polymerization conditions.

The average residence time in the first polymerization stage is typically from 20 to 120 minutes, preferably from 30 to 80 minutes.

It is preferred if the LMW component is produced in two loop reactors in series. The first loop reactor forms a first fraction and the second loop reactor forms a second fraction of the LMW component.

The $MFR_2$ after loop2 can be up to double or 1.5 times the $MFR_2$ after loop1. Thus the $MFR_2$ of the first fraction (ai) is lower than the $MFR_2$ of the LMW component as a whole. Ideally, the MFR increases from first to second fraction.

Generally the quantity of catalyst used will depend upon the nature of the catalyst, the reactor types and conditions and the properties desired for the polymer product.

Gas phase polymerisation can be carried out using known conditions. In general, the temperature in gas phase polymerisation is typically from 60 to 105 °C, e.g., 70 to 90 °C. The pressure is from 10 to 40 bar, for example, 15 to 20 bar.

The obtained polymerisation product, may be compounded in a known manner and optionally with additive(s) and pelletised for further use.

The resulting end product consists of an intimate mixture of the polymers from the three main reactors, the different molecular-weight-distribution curves of these polymers together forming a molecular-weight-distribution curve having a broad maximum or three maxima, i.e. the end product is a trimodal polymer mixture.

It is most preferred that the polymerization is carried out in a prepolymerization reactor/two slurry loop reactors/ a gas-phase reactor. Preferably, the polymerization conditions in the preferred four-step method are chosen so that fraction (ai) is produced in one step in a first slurry loop reactor, fraction (aii) is produced in a second step in a second slurry loop reactor and fraction (B) is produced in further step, preferably the third reactor. The order of these steps may, however, be reversed.

**Cables**

The multimodal polyethylene composition of the invention is ideally used in a layer in a cable such as the insulation layer of a cable. Typically, a polymer composition comprising the multimodal polyethylene composition of the invention and one or more additional components, such as additives, is prepared and can be used in the insulation layer of a cable. Such an insulation layer may comprise at least 80 wt% of the multimodal polyethylene composition, such as at least 90 wt% of the multimodal polyethylene composition.

In some embodiments, the multimodal polyethylene composition is the only polymer component present in the insulation layer (other than any masterbatch carrier polymers that may be present).

The insulation layer may comprise further components other than the multimodal polyethylene composition, such as additives which may optionally be added in a mixture with a carrier polymer, i.e. in so called master batch.

The insulation layer in the cable may contain, in addition to the multimodal polyethylene of the invention further component(s) such as antioxidant(s), stabiliser(s), processing aid(s), flame retardant additive(s), water tree retardant additive(s), acid or ion scavenger(s), inorganic filler(s) and voltage stabilizer(s), as known in the polymer field.

As non-limiting examples of antioxidants e.g. sterically hindered or semi-hindered phenols, aromatic amines, aliphatic sterically hindered amines, organic phosphites or phosphonites, thio compounds, and mixtures thereof, can be mentioned.

Further, the insulation layer may be without, i.e. does not comprise, a carbon black.

The multimodal composition of the invention is suitable for use in a low voltage (LV), medium voltage (MV), high voltage (HV) and/or extra-high voltage (EHV) power cables.

High voltage direct current (HV DC) is usually considered to be operating at voltages higher than 36 kV and up to 320 kV DC, extra high voltage direct current (EHV DC) is usually considered to be above 320 kV DC, high voltage alternating current (HV AC) is usually considered to be up to 220 kV AC, and extra high voltage alternating current (EHV AC) is usually considered to be above 220 kV AC. Typically a high voltage direct current (HV DC) power cable and extra high voltage direct current (EHV DC) power cable operate at voltages of 40 kV or higher, even at voltages of 50 kV or higher. A power cable operating at very high voltages is known in the art as extra high voltage direct current (EHV DC) power cable which in practice can operate as high as 900 kV, or possibly even higher.

HV and EHV DC power cables require very low DC electrical conductivity of the insulation layer. Otherwise the leakage current flowing through the insulation layer can become too high. Since the leakage current generates heat it can lead to thermal breakdown of the power cable. That is why low DC electrical conductivity of the insulation layer is of outmost importance for HV and EHV DC power cables.

In an embodiment of the present invention, the power cable is a high voltage (HV) and/or extra-high voltage (EHV) power cable.

The present invention further provides a direct current (DC) power cable.

In a most preferred embodiment, the power cable is a high voltage direct current (HV DC) and/or an extra high voltage direct current (EHV DC) power cable.

Accordingly, the low DC electrical conductivity makes the multimodal polyethylene composition of the present invention desirable for power cable applications. In DC power cable applications, the voltage applied to the power cable is direct current (DC). A DC power cable is defined to be a DC cable transferring energy operating at any DC voltage level, typically operating at DC voltages higher than 1 kV.

The present invention is further directed to a power cable, for example, a direct current (DC) power cable, comprising a conductor surrounded by at least an inner semiconductive layer, an insulation layer and an outer semiconductive layer, in that order, wherein at least one layer, for example, at least an insulation layer, comprises the multimodal composition of the present invention.

The outer semiconductive layer preferably comprises, for example, consists of, a non-crosslinked second semiconductive composition. The inner semiconductive layer, for example, comprises, e.g., consists of, a non-crosslinked first semiconductive composition.

The first and the second semiconductive compositions can be different or identical and comprise a polymer(s) which is, for example, a polyolefin or a mixture of polyolefins and a conductive filler, e.g. carbon black. Suitable polyolefin(s) are e.g. polyethylene produced in a low pressure process or a polyethylene produced in a HP process (LDPE).

The term "conductor" means herein that the conductor comprises one or more wires. Moreover, the cable may comprise one or more such conductors. Further, the conductor may be a DC electrical conductor and comprise one or more metal wires.

As well known the cable can optionally comprise further layers, e.g. layers surrounding the insulation layer or, if present, the outer semiconductive layers, such as screen(s), a jacketing layer(s), other protective layer(s) or any combinations thereof.

The invention also provides a process for producing a power cable, e.g. a direct current (DC) power cable, wherein the process comprises the steps of

- applying on a conductor, for example, by (co)extrusion, an inner semiconductive layer comprising a first semiconductive composition, an insulation layer comprising an insulation composition and an outer semiconductive layer comprising a second semiconductive composition, in that order, wherein the insulation layer comprises a multimodal polyethylene composition of the invention.

Further, a power cable, e.g. a direct current (DC) power cable, may be produced, wherein the process comprises the steps of

(a) - providing and mixing, for example, meltmixing in an extruder, a first semiconductive composition comprising a polymer, a carbon black and optionally further component(s) for the inner semiconductive layer,

- providing and mixing, for example, meltmixing in an extruder the multimodal polyethylene composition of the present invention and optional additives,
- providing and mixing, for example, meltmixing in an extruder, a second semiconductive composition which comprises a polymer, a carbon black and optionally further component(s) for the outer semiconductive layer, and

(b) applying on a conductor, for example, by coextrusion,

- a meltmix of the first semiconductive composition obtained from step (a) to form the inner semiconductive layer,
- a meltmix of the multimodal polyethylene composition of the invention obtained from step (a) to form the insulation layer, and
- a meltmix of the second semiconductive composition obtained from step (a) to form the outer semiconductive layer.

The term "(co)extrusion" means herein that in case of two or more layers, said layers can be extruded in separate steps, or at least two or all of said layers can be coextruded in a same extrusion step, as well known in the art. The term "(co) extrusion" means herein also that all or part of the layer(s) are formed simultaneously using one or more extrusion heads. For instance a triple extrusion head can be used for forming three layers. In case a layer is formed using more than one extrusion heads, then for instance, the layers can be extruded using two extrusion heads, the first one for forming the inner semiconductive layer and the inner part of the insulation layer, and the second head for forming the outer insulation layer and the outer semiconductive layer.

The advantages of the invention may include:

- High electrical performance of the insulation system of the HV DC cable.
- Robust high speed extrusion possible leading to longer stable production periods at higher extrusion speed and quality due to no or very low risk to scorching (undesired premature crosslinking) in the semiconductive and insulation layers. In principle this means that the extruder can be run for longer times. As a result longer maximum cable lengths can be produced requiring fewer joints in the power cable system.
- Degassing step can be omitted, and thus accelerate the overall cable production process, since no undesired crosslinking by-products, i.e. decomposition products, formed from any crosslinking agent need to be removed.
- In-line jacketing can be done as no need to degas cable.

The thickness of the insulation layer of the power cable, e.g. the direct current (DC) power cable, for example, the HV DC power cable, is typically 2 mm or more, for example, at least 3 mm, for example, at least 5 to 100 mm, for example, from 5 to 50 mm, and conventionally 5 to 40 mm, e.g. 5 to 35 mm, when measured from a cross section of the insulation layer of the cable. The thickness of the inner and outer semiconductive layers is typically less than that of the insulation layer, and in, for example, HV DC power cables can be e.g. more than 0.1 mm, such as from 0.3 up to 20 mm, 0.3 to 10 of inner semiconductive and outer semiconductive layer. The thickness of the inner semiconductive layer is for example, 0.3 - 5.0 mm, e.g., 0.5 - 3.0 mm, for example, 0.8 - 2.0 mm. The thickness of the outer semiconductive layer is, for example, 0.3 to 10 mm, such as 0.3 to 5 mm, e.g., 0.5 to 3.0 mm, for example, 0.8 - 3.0 mm. It is evident for and within the skills of a skilled person that the thickness of the layers of the power cable, e.g. the direct current (DC) power cable, depends on the intended voltage level of the end application cable and can be chosen accordingly.

## Experimental part

## Determination methods

Unless otherwise stated in the description or experimental part the following methods were used for the property determinations.
**wt%:** % by weight

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$) or 21.6 kg ($MFR_{21}$).

**Density**

The density was measured according to ISO 1183-2. The sample preparation was executed according to ISO 1872-2 Table 3 Q (compression moulding).

**DC Conductivity method**

Plaque sample procedure:

Circular plaques were compression moulded from pellets of the test polymer composition, i.e. the polymer composition of the present invention, using a 0.5 mm thick stainless steel frame with a 330 mm circular hole. The final plaques therefore had a thickness of 0.5 mm and a diameter of 330 mm. Teflon films were placed between the polymer and the press surfaces.
The test polymer composition was then press-moulded at 130°C for 60 s at a pressure of 26 kPa. Thereafter the pressure was increased to 2.6 MPa while the temperature gradually increased to reach 180°C after 200 s. The temperature was kept constant at 180°C for 340 s. Finally, the temperature was decreased with a cooling rate of 15 °C/min until room temperature was reached and the pressure was released.

Measurement procedure:

A high voltage source was connected to the upper electrode, to apply voltage over the test plaque sample. The resulting current through the sample, i.e. sample of the polymer composition of the present invention, was measured with an electrometer. The measurement cell was a three electrodes system with brass electrodes placed in an oven at 70°C. The diameter of the measurement electrode was 100 mm.
A DC voltage of 15 kV was applied leading to a mean electric field of 30 kV/mm. The current through the plaque, i.e. the polymer composition of the present invention, was logged for 11 hours and the current at that time was used to calculate the conductivity of the insulation at 30 kV/mm. The voltage was then increased to 22.5 kV leading to a mean electric field of 45 kV/mm. The current through the plaque, i.e. the polymer composition of the present invention, was logged for 6 hours and the current at that time was used to calculate the conductivity of the insulation at 45 kV/mm. The voltage was then increased to 30 kV leading to a mean electric field of 60 kV/mm. The current through the plaque, i.e. the polymer composition of the present invention, was logged for 6 hours and the current at that time was used to calculate the conductivity of the insulation at 60 kV/mm.

**GPC**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \times M_i)}{\sum_{i=1}^{N} A_i} \quad (2)$$

$$M_z = \frac{\sum_{i=1}^{N}(A_i \; x \; M_i^2)}{\sum_{i=1}^{N}(A_i x M_i)} \; (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \; x \; 10^{-3} \; mL/g, \alpha_{PS} = 0.655$$

$$K_{PE} = 39 \; x \; 10^{-3} \; mL/g, \qquad \alpha_{PE} = 0.725$$

$$K_{PP} = 19 \; x \; 10^{-3} \; mL/g, \alpha_{PP} = 0.725$$

A third order polynomial fit was used to fit the calibration data. All samples were prepared in the concentration range of 0,5 -1 mg/ml and dissolved at 160 °C for 2.5 hours for PP or 3 hours for PE under continuous gentle shaking.

**Flexural Modulus**

Flexural modulus was determined according to ISO 178, which describes the procedure for a 3 point bending test. The test specimens were prepared by milling samples 80*15*4 mm from 4 mm thick compression moulded plaques prepared according to EN ISO 17855-2:2016 and tested at a cross-head speed of 2 mm/min using a 100N load cell.

**Melting Points**

Melting points were determined using Instrument: DSC Q2000 from TA Instruments

Pans: Tzero Al pans
Method: According to ISO-11357-3:

> *1st heating 10°C/min, 30 - 180°C*
> *Isothermal 180°C, 2 min*
> *Cooling 10°C/min, 180 - (-30)°C*
> *Isothermal (-30)°C, 2 min*
> *2nd heating 10°C/min, (-30) - 180°C*

**Rheology, dynamic (Viscosity) method ISO 6721-1:**

Dynamic rheological properties of the polymer, here the polymer composition may be determined using a controlled stress rheometer, using a parallel-plate geometry (25 mm diameter) and a gap of 1.3 mm between upper and bottom plates. Previous to test, samples need to be stabilized by dry blending pellets together with 0.25-0.3% Irganox B225. Irganox B 225 is a blend of 50% Irganox 1010, Pentaerythritol tetrakis(3-(3,5-ditert-butyl-4-hydroxyphenyl) propionate), CAS-no. 6683-19-8 and 50% Irgafos 168, Tris(2,4-di-tert-butylphenyl) phosphite, CAS-no. 31570-04-4. Note that to add an antioxidant, here Irganox B225, is normally not the standard procedure of method 15 ISO 6721-1. Frequency sweep test, i.e. the "Rheology, dynamic (Viscosity) method", was performed according to the ISO standard method, ISO 6721-1 with an angular frequency range from 628-0.01 rad/s. All experiments were conducted under nitrogen atmosphere at a constant temperature of 190 °C and strain within the linear viscoelastic region. During analysis, storage modulus (G'), loss modulus (G"), complex modulus (G*) and complex viscosity (η*) were recorded and plotted versus frequency (ω). The measured values of complex viscosity (η*) at angular frequency of 0.05 and 300 rad/s are taken from test. The abbreviation of these parameters 25 are η*0.05 and η*300 respectively.

The zero viscosity η*0 value is calculated using Carreau-Yasuda model. For cases when the use of this model for the estimation of the Zero shear viscosity is not recommendable a rotational shear test at low shear rate is performed. This test is limited to a shear rate range of 0.001 to 1 s-1 and a temperature of 190 °C.

## Tensile - ISO527-2/5A 50 mm/min

For tensile testing (stress and strain at break), specimens were prepared and measured according to ISO 527-2/5A by die cutting from compression moulded plaques of 1.8 mm thickness tested at 23°C and 50% relative humidity with 1 kN load cell a tensile testing speed of 50 mm/min, a grip distance of 50 mm and a gauge length of 20 mm.

## Shore D

Shore D (3s) is determined acc. ISO868 on moulded specimen with a thickness of 4 mm. The shore hardness is determined after 3 seconds after the pressure foot is in firm contact with the test specimen. The specimen was moulded according to EN ISO 1872-2.

## Comonomer contents

Quantification of comonomer content in polymers by NMR spectroscopy The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

## Catalyst preparation

As catalyst was used alumoxane containing, supported catalyst containing metallocene bis(1-methyl-3-n-butylcyclopentadienyl) zirconium (IV) chloride and with enhanced ActivCat® activator technology from Albemarle (Grace) Corporation.

## Preparation of polyethylene

The multimodal polyethylene composition was prepared using a prepolymerisation reactor, a first and second slurry-loop reactors as well as a gas phase reactor. The prepolymerisation stage was carried out in slurry in a 50 dm3 loop reactor under conditions and using feeds of catalyst (as prepared above), monomers, antistatic agent and diluent (propane (C3)) as disclosed in Table 1.

The obtained slurry together with the prepolymerised catalyst was continuously introduced into the 150 dm3 first loop reactorThe polymer slurry was continuously withdrawn from the first loop reactor and transferred into the 300 dm3 second loop reactor. The slurry was continuously withdrawn from the second loop reactor to a flash stage where hydrocarbons were removed from the polymer. The polymer was then transferred into a gas phase reactor where the polymerisation was continued. The conditions and feeds/feed ratio in loop and gas phase polymerisation steps are disclosed in Table 2 and 3.

**Table 1: Process conditions in the Prepolymerisation**

|             |        | Ex 1   | Ex 2  | Ex 3  | Ex 4  |
|-------------|--------|--------|-------|-------|-------|
| Temperature | [°C]   | 50     | 50    | 50    | 50    |
| Pressure    | [bar]  | 57.48  | 57.50 | 57.91 | 57.46 |
| split       | %      | 2.95   | 2.83  | 2.9   | 2.97  |
| C2 feed     | g/h    | 0.2    | 0.2   | 0.2   | 0.2   |
| C4 feed     | g/h    | 101.22 | 99.99 | 49.98 | 49.96 |

(continued)

|  |  | Ex 1 | Ex 2 | Ex 3 | Ex 4 |
|---|---|---|---|---|---|
| Catalyst feed | g/h | 39.43 | 43.11 | 48.47 | 50.00 |

**Table 2a: Process condition in the Loop reactor 1** (fraction ai)

|  |  | Ex 1 | Ex 2 | Ex 3 | Ex 4 |
|---|---|---|---|---|---|
| Temperature | [°C] | 85 | 85 | 85 | 85 |
| Pressure | [bar] | 55.56 | 55.51 | 55.55 | 55.53 |
| H2/C2 | mol/kmol | 0.47 | 0.57 | 0.24 | 0.29 |
| C4/C2 | mol/kmol | 25.34 | 69.77 | 3.34 | 3.96 |
| split | % | 18.27 | 23.48 | 18.90 | 22.35 |
| Prep+loop1 | % | 21.22 | 26.31 | 21.8 | 25.32 |
| MFR2 | g/10min | 26.2 |  | 14 | 30.4 |

**Table 2b: Process condition in the Loop reactor 2 (fraction aii)**

|  |  | Ex 1 | Ex 2 | Ex 3 | Ex 4 |
|---|---|---|---|---|---|
| Temperature | [°C] | 85 | 85 | 85 | 85 |
| Pressure | [bar] | 53.74 | 53.70 | 53.75 | 53.73 |
| H2/C2 | mol/kmol | 0.48 | 0.25 | 0.33 | 0.28 |
| C4/C2 | mol/kmol | 184.62 | 122.42 | 2.69 | 7.42 |
| split | % | 21.83 | 23.31 | 18.88 | 22.07 |
| LMW split (ai+aii) | % | 43.05 | 49.62 | 40.68 | 47.39 |
| MFR2 | g/10min | 112 |  | 31 | 55.3 |

**Table 3: Process conditions in the Gas phase reactor (HMW component)**

|  |  | Ex 1 | Ex 2 | Ex 3 | Ex 4 |
|---|---|---|---|---|---|
| Temperature | [°C] | 75 | 80 | 80 | 80 |
| Pressure | [bar] | 20.01 | 20.0 | 20.0 | 20.0 |
| H2/C2 | mol/kmol | 0.036 | 0.081 | 0.082 | 0.120 |
| C4/C2 | mol/kmol | 0 | 0 | 0 | 0 |
| C6/C2 | mol/kmol | 4.07 | 6.37 | 8.27 | 14.44 |
| split | % | 56.95 | 50.38 | 59.32 | 52.61 |

For all the tables:

C2: ethylene
H2: hydrogen
C4: 1-butene
C6: 1-hexene

The polymer obtained from the gas phase reactor is pelletised with 0.22 wt% of 1:1 mixture of Pentaerythrityl-tetrakis(3-(3',5'-di-tert. butyl-4-hydroxyphenyl)-propionate cas nr 6683-19-8 and Tris (2,4-di-t-butylphenyl) phosphite cas nr 31570-04-4, 0.15 wt% of Calcium stearate cas nr 1592-23-0 and 0.3 wt% of1:1 mixture of Dimethyl succinate polymer with 4-hydroxy-2,2,6,6-tetramethyl-1-piperidine ethanol ca snr 65447-77-0 and Poly((6-((1,1,3,3-tetramethylbutyl)amino)-1,3,5-triazine-2,4-diyl)(2,2,6,6-tetramethyl-4-piperidyl)imino)-1,6-hexanediyl    ((2,2,6,6-tetramethyl-4-piperidyl)imino)) cas nr 71878-19-8.

The properties are determined on the pellets. The inventive examples are compared to a commercial bimodal HDPE of density 945 $kg/m^3$ and $MFR_2$ 1.89 g/10min.

**Table 5**

|  |  | Ex 1 | Ex 2 | Ex 3 | Ex 4 | CE1 |
|---|---|---|---|---|---|---|
| Density | $Kg/m^3$ | 941.5 | 941.1 | 943.5 | 943.3 | 945 |
| MFR2 | g/10min | 0.72 | 2.14 | 1.38 | 2.95 | 1.89 |
| MFR5 | g/10min | 2.04 | 6.28 | 3.8 | 8.14 |  |
| MFR21 | g/10min | 22.6 | 68.3 | 34.9 | 85.3 | 108 |
| Melting point | °C | 126 | 127 | 128 | 125 | 127 |
| Flexural Modulus | MPa | 633 | 737 | 724 | 642 | 924 |
| Ratio Flex. Mod/Melt ing point | MPa/°C | 5.02 | 5.80 | 5.66 | 5.14 | 7.28 |
| C4 | Mol% | 0.25 | 0.37 | 0 | 0 | 1.62 |
| C6 | Mol% | 0.31 | 0.3 | 0.54 | 0.77 | - |
| Mn |  | 12950 | 12450 | 11550 | 9700 | 9265 |
| Mw |  | 114500 | 84550 | 94800 | 77700 | 103500 |
| Mz |  | 342000 | 241000 | 243500 | 203500 | 502000 |
| Mw/Mn |  | 8.86 | 6.78 | 8.21 | 8.01 | 11.2 |
| Strain at break | % | 757 | 773 | 683 | 636 | 787 |
| Stress at break | MPa | 38.1 | 33.27 | 36.77 | 31.91 | 26.4 |
| Shore D (3s) |  | 58.5 | 58.5 | 59 | 58.5 | 59.7 |

**Table 6**

|  | Rheology |  |  | Flexural modulus | DC conductivity (fS/m) |  |  |
|---|---|---|---|---|---|---|---|
|  | Temp (°C) | eta (0,05rad/s) (Pa.s) | eta (300rad/s) (Pa.s) | MPa | 30 kV/mm | 45 kV/mm | 60 kV/mm |
| Ex 1 | 190 | 12175 | 968 | 633 |  |  |  |
| Ex 2 | 190 | 4249 | 656 | 737 |  |  |  |
| Ex 3 | 190 | 6110 | 889.5 | 724 | 2.9 | 9 | 20 |
| Ex 4 | 190 | 3061 | 613 | 642 | 3.8 | 13.1 | 44.7 |
| Comp. Ex 1 | 190 | 7070 | 556 | 924 | 7.7 | 36.7 | 154.7 |

As can be seen form table 6, the multimodal polyethylene composition of the invention show excellent low DC conductivity and low flexural modulus. They outperform a similar bimodal copolymer. The polyethylenes in accordance with the present invention, are suitable for use in power cables, e.g. in the insulation thereof.

**Claims**

1. A multimodal polyethylene composition having a lower molecular weight (LMW) ethylene homo or copolymer component (A) and a higher molecular weight ethylene copolymer component (B);

   wherein the lower molecular weight component comprises:

   (ai) a first fraction which comprises an ethylene homo or copolymer of ethylene and one or more C3-10 alpha olefins; and
(aii) a second fraction which comprises a different ethylene homo or copolymer of ethylene and one or more C3-10 alpha olefins;

wherein the $MFR_2$ of the fraction (ai) is lower than fraction (aii) and wherein each fraction (ai) and (aii) of the LMW component forms at least 10 wt% of the multimodal polyethylene composition;
wherein the multimodal polymer composition has a density of 930kg/m$^3$ or more (ISO1183), such as 938 to 955 kg/m$^3$, an $MFR_2$ (ISO1133 at 190°C and 2.16 kg load) in the range of 0.05 to 10 g/10min, and a flexural modulus of up to 800 MPa, such as 300 to 800 MPa (ISO 178:2010).

2. A multimodal polyethylene composition as claimed in claim 1 comprising

(A) a lower molecular weight ethylene homopolymer or copolymer component comprising:

(ai) 40 to 60 wt% of a first ethylene homopolymer fraction or copolymer fraction of ethylene and one or more C3-10 alpha olefins; and
(aii) 40 to 60 wt% of a second different ethylene homopolymer fraction or copolymer fraction of ethylene and one or more C3-10 alpha olefins;

(B) a higher molecular weight ethylene copolymer component of ethylene and one or more C3-10 alpha olefins.

3. A multimodal polyethylene composition as claimed in claim 1 to 2 comprising

(A) a lower molecular weight ethylene homopolymer or copolymer component with one or more C3-8 alpha olefins; and
(B) a higher molecular weight ethylene copolymer component with one or more C3-8 alpha olefins.

4. A multimodal polyethylene composition as claimed in any preceding claim comprising 35 to 60 wt% of said lower molecular weight component and 40 to 65 wt% of said higher molecular weight component, preferably 40 to 60 wt% of said lower molecular weight component and 40 to 60 wt% of said higher molecular weight component, more especially 40 to 55 wt% of said lower molecular weight component and 45 to 60 wt% of said higher molecular weight component.

5. A multimodal polyethylene composition as claimed in claim 1 to 4 comprising a lower molecular weight ethylene homopolymer or ethylene 1-butene copolymer; and a higher molecular weight ethylene 1-hexene copolymer component, especially wherein said a lower molecular weight copolymer comprises

(ai) a first ethylene homopolymer or ethylene 1-butene copolymer fraction; and
(aii) a second different homopolymer or ethylene 1-butene copolymer fraction.

6. A multimodal polyethylene composition as claimed in any preceding claim obtained using a single site catalyst such as a metallocene catalyst, such as one having an Mw/Mn of 5 to 12.

7. A multimodal polyethylene composition as claimed in any preceding claim which is not crosslinked.

8. A multimodal polyethylene composition as claimed in any preceding claim having a melting point of at least 122 °C, such as in the range of 122 to 135°C, more preferably 123 to 132 °C, especially 124 to 130 °C.

9. A multimodal polyethylene composition as claimed in any preceding claim having an $MFR_2$ of 0.05 to 5.0 g/10 min, preferably 0.1 to 4.0 g/10 min, more preferably 0.25 to 3.5 g/10min (ISO1133, at 190°C and 2.16 kg load) and/or a density in the range of 938 to 950 kg/m$^3$, 938 kg/m$^3$ to 946 kg/m$^3$, especially, 940 to 945 kg/m$^{3.}$

10. A multimodal polyethylene composition as claimed in any preceding claim having one or more of:

a flexural modulus of 500 to 775 MPa;
a comonomer content of 0.5 to 1.0 mol%;
an Mw/Mn of 5 to 12;
a DC conductivity of less than 7.0 fS/m measured at 70 °C and 30 kV/mm mean electric field on a 0.5 mm plaque sample consisting of the polymer, such as 0.1 to 7.0 fS/m;

an eta300 value of less than 1000 Pa.s, such as 300 to 900 Pa.s;
an eta0.05 value of more than 3000 Pa.s, such as 3000 to 7000 Pa.s.

11. A multimodal polyethylene composition as claimed in any preceding claim wherein the ratio between flexural modulus and melting point is between 4.5 and 6.5 (flexural mod. in MPa/melting point in Celsius), preferably between 5.0 and 6.0.

12. A multimodal polyethylene composition as claimed in any preceding claim wherein each fraction (ai) and (aii) of the LMW component forms at least 12 wt% of the multimodal polyethylene composition.

13. A multimodal polyethylene composition as claimed in any preceding claim wherein the weight ratio between fractions (ai) and (aii) of the LMW component is in the range of 1:5 to 5:1, such as 4:1 to 1:4.

14. A multimodal polyethylene composition as claimed in any preceding claim wherein each fraction (ai) and (aii) forms at least 20 wt% of the LMW component, such as at least 30 wt% of the LMW component.

15. A cable, preferably a power cable, more preferably a DC power cable, comprising a conductor surrounded by at least one layer comprising a multimodal polyethylene composition as claimed in any preceding claim, especially comprising a conductor surrounded by an inner semiconductive layer, an insulating layer and an outer semiconductive layer, wherein at least the insulation layer comprises multimodal polyethylene as claimed in any one of claims 1 to 14, preferably wherein said multimodal polyethylene composition forms at least 80 wt% of the layer in which it is present, such as 80 to 100 wt%.

16. A process for the preparation of a multimodal polyethylene composition comprising lower molecular weight (LMW) ethylene homo or copolymer component (A) and a higher molecular weight ethylene copolymer component (B), said process comprising:

> (I) polymerizing ethylene and optionally at least one C3-10 alpha olefin comonomer in the presence of a single site catalyst in a first slurry reactor to produce a fraction (ai);
> (II) polymerizing ethylene and optionally at least one C3-10 alpha olefin comonomer in the presence of the single site catalyst and fraction (ai) in a second slurry reactor so as to prepare a fraction (aii) which together with fraction (ai) forms said lower molecular weight ethylene homo or copolymer component (A) wherein each fraction (ai) and (aii) of the LMW component forms at least 10 wt% of the multimodal polyethylene composition; and
> (III) in the presence said LMW ethylene homo or copolymer component (A) and said single site catalyst, polymerizing ethylene and at least one C3-10 alpha olefin comonomer so as to form said higher molecular weight ethylene copolymer component (B);

wherein said multimodal polyethylene composition has a density of 930 kg/m$^3$ or more, an MFR$_2$ (ISO1133 at 190°C and 2.16 kg load) in the range of 0.05 to 10 g/10min, and a flexural modulus of up to 800 MPa (ISO 178:2010).

**Patentansprüche**

1. Multimodale Polyethylenzusammensetzung, die eine Ethylenhomo- oder -copolymerkomponente (A) mit niedrigerem Molekulargewicht (LMW) und eine Ethylencopolymerkomponente (B) mit höherem Molekulargewicht aufweist;

   wobei die Komponente mit niedrigerem Molekulargewicht Folgendes umfasst:

> (ai) eine erste Fraktion, die ein Ethylenhomo- oder -copolymer von Ethylen umfasst und ein oder mehrere C3-10-Alpha-Olefine; und
> (aii) eine zweite Fraktion, die ein anderes Ethylenhomo- oder -copolymer aus Ethylen und einem oder mehreren C3-10-Alpha-Olefinen umfasst;

   wobei der MFR$_2$ der Fraktion (ai) niedriger ist als der Fraktion (aii) ist und wobei jede Fraktion (ai) und (aii) der LMW-Komponente mindestens 10 Gew.-% der multimodalen Polyethylenzusammensetzung bildet; wobei die multimodale Polymerzusammensetzung eine Dichte von 930 kg/m$^3$ oder mehr (ISO1183), wie 938 bis 955 kg/m$^3$, einen MFR$_2$ (ISO1133 bei 190 °C und 2,16 kg Last) im Bereich von 0,05 bis 10 g/10 Min. und einen Biegemodul von bis zu 800 MPa, wie 300 bis 800 MPa (ISO 178:2010), aufweist.

2. Multimodale Polyethylenzusammensetzung nach Anspruch 1, umfassend

(A) eine Komponente aus Ethylenhomopolymer oder -copolymer mit niedrigerem Molekulargewicht, umfassend:

(ai) 40 bis 60 Gew.-% einer ersten Ethylenhomopolymerfraktion oder Copolymerfraktion aus Ethylen und einem oder mehreren C3-10-Alpha-Olefinen; und
(aii) 40 bis 60 Gew.-% einer zweiten unterschiedlichen Ethylenhomopolymerfraktion oder Copolymerfraktion aus Ethylen und einem oder mehreren C3-10-Alpha-Olefinen;

(B) eine Ethylencopolymerkomponente mit höherem Molekulargewicht aus Ethylen und einem oder mehreren C3-10-Alpha-Olefinen.

3. Multimodale Polyethylenzusammensetzung nach Anspruch 1 bis 2, umfassend

(A) eine Ethylencopolymerkomponente mit einem niedrigeren Molekulargewicht oder eine Copolymerkomponente mit einem oder mehreren C3-8-Alpha-Olefinen; und
(B) eine Ethylencopolymerkomponente mit höherem Molekulargewicht und einem oder mehreren C3-8-Alpha-Olefinen.

4. Multimodale Polyethylenzusammensetzung nach einem der vorstehenden Ansprüche, umfassend 35 bis 60 Gew.-% der Komponente mit niedrigerem Molekulargewicht und 40 bis 65 Gew.-% der Komponente mit höherem Molekulargewicht, vorzugsweise 40 bis 60 Gew.-% der Komponente mit niedrigerem Molekulargewicht und 40 bis 60 Gew.-% der Komponente mit höherem Molekulargewicht, insbesondere 40 bis 55 Gew.-% der Komponente mit niedrigerem Molekulargewicht und 45 bis 60 Gew.-% der Komponente mit höherem Molekulargewicht.

5. Multimodale Polyethylenzusammensetzung nach einem der Ansprüche 1 bis 4, umfassend ein Ethylenhomopolymer oder Ethylen-1-Buten-Copolymer mit niedrigerem Molekulargewicht und eine Ethylencopolymerkomponente mit höherem Molekulargewicht, insbesondere eine Ethylen-1-Hexen-Copolymerkomponente, insbesondere wobei das Copolymer mit niedrigerem Molekulargewicht Folgendes umfasst

(ai) eine erste Ethylenhomopolymer- oder Ethylen-1-Buten-CopolymerFraktion; und
(aii) eine zweite andere Homopolymer- oder Ethylen-1-Buten-CopolymerFraktion.

6. Multimodale Polyethylenzusammensetzung nach einem der vorstehenden Ansprüche, die unter Verwendung eines Katalysators mit einer einzigen Stelle, wie einem Metallocenkatalysator, der beispielsweise ein Mw/Mn von 5 bis 12 aufweist, erhalten wird.

7. Multimodale Polyethylenzusammensetzung nach einem der vorstehenden Ansprüche, die nicht vernetzt ist.

8. Multimodale Polyethylenzusammensetzung nach einem der vorstehenden Ansprüche, die einen Schmelzpunkt von mindestens 122 °C, wie etwa im Bereich von 122 bis 135 °C, vorzugsweise 123 bis 132 °C, insbesondere 124 bis 130 °C, aufweist.

9. Multimodale Polyethylenzusammensetzung nach einem der vorstehenden Ansprüche, die eine MFR$_2$ von 0,05 bis 5,0 g/10 Min., vorzugsweise 0,1 bis 4,0 g/10 Min., besonders bevorzugt 0,25 bis 3,5 g/10 Min. (ISO1133, bei 190 °C und 2,16 kg Last) und/oder eine Dichte im Bereich von 938 bis 950 kg/m$^3$, 938 kg/m$^3$ bis 946 kg/m$^3$, insbesondere 940 bis 945 kg/m$^3$ aufweist.

10. Multimodale Polyethylenzusammensetzung nach einem der vorstehenden Ansprüche, die eines oder mehreres von Folgendem aufweist:

einen Biegemodul von 500 bis 775 MPa;
einen Comonomergehalt von 0,5 bis 1,0 Mol-%;
ein Mw/Mn von 5 bis 12;
eine Gleichstromleitfähigkeit von weniger als 7,0 fS/m, gemessen bei 70 °C und
einem mittleren elektrischen Feld von 30 kV/mm an einer aus dem Polymer bestehenden 0,5-mm-Plakettenprobe, wie 0,1 bis 7,0 fS/m;
einen eta300-Wert von weniger als 1000 Pa.s, wie beispielsweise 300 bis 900 Pa.s;
einen eta0,05-Wert von mehr als 3000 Pa.s, wie beispielsweise 3000 bis 7000 Pa.s.

11. Multimodale Polyethylenzusammensetzung nach einem der vorstehenden Ansprüche, wobei das Verhältnis zwischen Biegemodul und Schmelzpunkt zwischen 4,5 und 6,5 liegt (Biegemodul. in MPa/Schmelzpunkt in Celsius), vorzugsweise zwischen 5,0 und 6,0.

12. Multimodale Polyethylenzusammensetzung nach einem der vorstehenden Ansprüche, wobei jede Fraktion (ai) und (aii) der LMW-Komponente mindestens 12 Gew.-% der multimodalen Polyethylenzusammensetzung bildet.

13. Multimodale Polyethylenzusammensetzung nach einem der vorstehenden Ansprüche, wobei das Gewichtsverhältnis zwischen den Fraktionen (ai) und (aii) der LMW-Komponente im Bereich von 1:5 bis 5:1, wie beispielsweise 4:1 bis 1:4, liegt.

14. Multimodale Polyethylenzusammensetzung nach einem der vorstehenden Ansprüche, wobei jede Fraktion (ai) und (aii) mindestens 20 Gew.-% der LMW-Komponente bildet, wie beispielsweise mindestens 30 Gew.-% der LMW-Komponente.

15. Kabel, vorzugsweise Stromkabel, besonders bevorzugt Gleichstromkabel, umfassend einen Leiter, der von mindestens einer Schicht umgeben ist, die eine multimodale Polyethylenzusammensetzung nach einem der vorstehenden Ansprüche umfasst, insbesondere umfassend einen Leiter, der von einer inneren halbleitenden Schicht, einer isolierenden Schicht und einer äußeren halbleitenden Schicht umgeben ist, wobei mindestens die Isolierschicht multimodales Polyethylen nach einem der Ansprüche 1 bis 14 umfasst, vorzugsweise wobei die multimodale Polyethylenzusammensetzung mindestens 80 Gew.-% der Schicht ausmacht, in der sie enthalten ist, wie beispielsweise 80 bis 100 Gew.-%.

16. Prozess zur Herstellung einer multimodalen Polyethylenzusammensetzung, die eine Ethylenhomo- oder -copolymerkomponente (A) mit niedrigerem Molekulargewicht (LMW) und eine Ethylencopolymerkomponente (B) mit höherem Molekulargewicht umfasst, der Prozess umfassend:

(I) Polymerisieren von Ethylen und optional mindestens einem C3-10-Alpha-Olefin-Comonomer in Gegenwart eines Katalysators mit einer einzigen Stelle in einem ersten Aufschlämmungsreaktor zur Herstellung einer Fraktion (ai);
(II) Polymerisieren von Ethylen und optional mindestens einem C3-10-Alpha-Olefin-Comonomer in Gegenwart des Katalysators mit einer einzigen Stelle und der Fraktion (ai) in einem zweiten Aufschlämmungsreaktor, um eine Fraktion (aii) herzustellen, die zusammen mit der Fraktion (ai) die Ethylenhomo- oder - copolymerkomponente (A) mit niedrigerem Molekulargewicht bildet,
wobei jede Fraktion (ai) und (aii) der LMW-Komponente mindestens 10 Gew.-% der multimodalen Polyethylenzusammensetzung bildet; und
(III) in Gegenwart der LMW-Ethylenhomo- oder -copolymerkomponente (A) und des Katalysators mit einer einzigen Stelle, Polymerisieren von Ethylen und mindestens einem C3-10-Alpha-Olefin-Comonomer, um die Ethylencopolymerkomponente (B) mit höherem Molekulargewicht zu bilden;

wobei die multimodale Polyethylenzusammensetzung eine Dichte von 930 kg/m$^3$ oder mehr, einen MFR$_2$ (ISO1133 bei 190 °C und 2,16 kg Last) im Bereich von 0,05 bis 10 g/10 Min. und einen Biegemodul von bis zu 800 MPa (ISO 178:2010) aufweist.

## Revendications

1. Composition de polyéthylène multimodal présentant un composant homopolymère ou copolymère d'éthylène de poids moléculaire inférieur (LMW) (A) et un composant copolymère d'éthylène de poids moléculaire supérieur (B) ;

dans laquelle le composant de poids moléculaire inférieur comprend :

(ai) une première fraction qui comprend un homopolymère d'éthylène ou un copolymère d'éthylène et une ou plusieurs alpha-oléfines en C3-10 ; et

(aii) une seconde fraction qui comprend un homopolymère d'éthylène ou un copolymère d'éthylène différent et une ou plusieurs alpha-oléfines en C3-10 ;

dans laquelle le $MFR_2$ de la fraction (ai) est inférieur à celui de la fraction (aii) et dans laquelle chaque fraction (ai) et (aii) du composant LMW forme au moins 10 % en poids de la composition de polyéthylène multimodal ; dans laquelle la composition polymère multimodale présente une densité supérieure ou égale à 930 kg/m3 (ISO1183), telle que de 938 à 955 kg/m$^3$, un $MFR_2$ (ISO1133 à 190 °C et une charge de 2,16 kg) dans la plage de 0,05 à 10 g/10 min, et un module d'élasticité en flexion allant jusqu'à 800 MPa, tel que 300 à 800 MPa (ISO 178:2010).

2. Composition de polyéthylène multimodal selon la revendication 1, comprenant

(A) un composant homopolymère ou copolymère d'éthylène de poids moléculaire inférieur comprenant :

(ai) 40 à 60 % en poids d'une première fraction homopolymère d'éthylène ou d'une première fraction copolymère d'éthylène et d'une ou plusieurs alpha-oléfines en C3-10 ; et
(aii) 40 à 60 % en poids d'une seconde fraction homopolymère d'éthylène ou d'une seconde fraction copolymère d'éthylène différente et d'une ou plusieurs alpha-oléfines en C3-10 ;

(B) un composant copolymère d'éthylène de poids moléculaire supérieur d'éthylène et une ou plusieurs alpha-oléfines en C3-10.

3. Composition de polyéthylène multimodal selon les revendications 1 à 2 comprenant

(A) un composant homopolymère d'éthylène ou copolymère d'éthylène de poids moléculaire inférieur avec une ou plusieurs alpha-oléfines en C3-8 ; et
(B) un composant copolymère d'éthylène de poids moléculaire supérieur avec une ou plusieurs alpha-oléfines en C3-8.

4. Composition de polyéthylène multimodal selon une quelconque revendication précédente, comprenant 35 à 60 % en poids dudit composant de poids moléculaire inférieur et 40 à 65 % en poids dudit composant de poids moléculaire supérieur, de préférence 40 à 60 % en poids dudit composant de poids moléculaire inférieur et 40 à 60 % en poids dudit composant de poids moléculaire supérieur, plus précisément 40 à 55 % en poids dudit composant de poids moléculaire inférieur et 45 à 60 % en poids dudit composant de poids moléculaire supérieur.

5. Composition de polyéthylène multimodal selon les revendications 1 à 4 comprenant un homopolymère d'éthylène ou un copolymère d'éthylène 1-butène de poids moléculaire inférieur ; et un composant copolymère d'éthylène 1-hexène de poids moléculaire supérieur, en particulier dans laquelle ledit copolymère de poids moléculaire inférieur comprend

(ai) une première fraction homopolymère d'éthylène ou copolymère d'éthylène 1-butène ; et
(aii) une seconde fraction homopolymère ou copolymère d'éthylène 1-butène différente.

6. Composition de polyéthylène multimodal selon une quelconque revendication précédente, obtenue en utilisant un catalyseur à site unique tel qu'un catalyseur métallocène, tel qu'un présentant un Mw/Mn de 5 à 12.

7. Composition de polyéthylène multimodal selon une quelconque revendication précédente, qui n'est pas réticulée.

8. Composition de polyéthylène multimodal selon une quelconque revendication précédente, présentant un point de fusion d'au moins 122 °C, tel que dans la plage de 122 à 135 °C, plus préférentiellement de 123 à 132 °C, en particulier de 124 à 130 °C.

9. Composition de polyéthylène multimodal selon une quelconque revendication précédente, présentant un $MFR_2$ de 0,05 à 5,0 g/10 min, de préférence de 0,1 à 4,0 g/10 min, plus préférentiellement de 0,25 à 3,5 g/10 min (ISO1133, à 190 °C et une charge de 2,16 kg) et/ou une densité dans la plage de 938 à 950 kg/m$^3$, 938 kg/m$^3$ à 946 kg/m$^3$, en particulier, 940 à 945 kg/m $^3$.

10. Composition de polyéthylène multimodal selon une quelconque revendication précédente, présentant un ou plusieurs des éléments suivants :

un module d'élasticité en flexion de 500 à 775 MPa ;
une teneur en comonomères de 0,5 à 1,0 % en moles ;
un Mw/Mn de 5 à 12 ;
une conductivité CC inférieure à 7,0 fS/m, mesurée à 70 °C et un champ électrique moyen de 30 kV/mm sur une plaque échantillon de 0,5 mm consistant en le polymère, telle que de 0,1 à 7,0 fS/m ;
une valeur eta300 inférieure à 1 000 Pa.s, telle que 300 à 900 Pa.s ;
une valeur eta0,05 supérieure à 3 000 Pa.s, telle que 3 000 à 7 000 Pa.s.

11. Composition de polyéthylène multimodal selon une quelconque revendication précédente, dans laquelle le rapport entre le module d'élasticité en flexion et le point de fusion est compris entre 4,5 et 6,5 (mod. d'élasticité en flexion en MPa/point de fusion en Celsius), de préférence entre 5,0 et 6,0.

12. Composition de polyéthylène multimodal selon une quelconque revendication précédente, dans laquelle chaque fraction (ai) et (aii) du composant LMW forme au moins 12 % en poids de la composition de polyéthylène multimodal.

13. Composition de polyéthylène multimodal selon une quelconque revendication précédente, dans laquelle le rapport pondéral entre les fractions (ai) et (aii) du composant LMW se situe dans la plage de 1:5 à 5:1, tel que 4:1 à 1:4.

14. Composition de polyéthylène multimodal selon une quelconque revendication précédente, dans laquelle chaque fraction (ai) et (aii) forme au moins 20 % en poids du composant LMW, tel qu'au moins 30 % en poids du composant LMW.

15. Câble, de préférence câble d'alimentation, plus préférentiellement câble d'alimentation CC, comprenant un conducteur entouré d'au moins une couche comprenant une composition de polyéthylène multimodal selon une quelconque revendication précédente, comprenant notamment un conducteur entouré d'une couche semi-conductrice interne, d'une couche isolante et d'une couche semi-conductrice externe, dans lequel au moins la couche isolante comprend du polyéthylène multimodal selon l'une quelconque des revendications 1 à 14, de préférence dans lequel ladite composition de polyéthylène multimodal forme au moins 80 % en poids de la couche dans laquelle elle est présente, tel que 80 à 100 % en poids.

16. Processus de préparation d'une composition de polyéthylène multimodal comprenant un composant homopolymère ou copolymère d'éthylène de poids moléculaire inférieur (LMW) (A) et un composant copolymère d'éthylène de poids moléculaire supérieur (B), ledit processus comprenant :

(I) la polymérisation d'éthylène et éventuellement d'au moins un comonomère d'alpha-oléfine en C3-10 en présence d'un catalyseur à site unique dans un premier réacteur à combustible en suspension pour produire une fraction (ai) ;
(II) la polymérisation d'éthylène et éventuellement d'au moins un comonomère d'alpha-oléfine en C3-10 en présence du catalyseur à site unique et de la fraction (ai) dans un second réacteur à combustible en suspension de manière à préparer une fraction (aii) qui forme, avec la fraction (ai), ledit composant homopolymère ou copolymère d'éthylène de poids moléculaire inférieur (A),
dans lequel chaque fraction (ai) et (aii) du composant LMW forme au moins 10 % en poids de la composition de polyéthylène multimodal ; et
(III) en présence dudit composant homopolymère ou copolymère d'éthylène LMW (A) et dudit catalyseur à site unique, la polymérisation d'éthylène et d'au moins un comonomère d'alpha-oléfine en C3-10 de manière à former ledit composant copolymère d'éthylène de poids moléculaire supérieur (B) ;

dans lequel ladite composition de polyéthylène multimodal présente une densité supérieure ou égale à 930 kg/m$^3$, un MFR$_2$ (ISO1133 à 190 °C et une charge de 2,16 kg) dans la plage de 0,05 à 10 g/10 min, et un module d'élasticité en flexion allant jusqu'à 800 MPa (ISO 178:2010).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012150286 A
- WO 2017220609 A
- WO 2016097250 A
- EP 3252085 A
- EP 2182524 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- US 2007049711 A
- EP 1539775 A
- EP 0517868 A

### Non-patent literature cited in the description

- *CHEMICAL ABSTRACTS*, 6683-19-8
- *CHEMICAL ABSTRACTS*, 31570-04-4
- **A. J. BRANDOLINI** ; **D. D. HILLS**. NMR Spectra of Polymers and Polymer Additives. Marcel Dekker, Inc, 2000
- **S. BERGER** ; **S. BRAUN**. 200 and More NMR Experiments: A Practical Course. Wiley-VCH, 2004
- *CHEMICAL ABSTRACTS*, 1592-23-0
- *CHEMICAL ABSTRACTS*, 71878-19-8